# EUROPÄISCHE PATENTSCHRIFT

(11) **EP 0 644 902 B1**
(45) Veröffentlichungstag und Bekanntmachung des Hinweises auf die Patenterteilung: **11.12.1996**
(21) Anmeldenummer: 93912867.4
(22) Anmeldetag: 03.06.1993
(51) Int. Cl.: C08F 8/30, C08K 5/32, C08K 5/33

(54) **DISPERSION ODER LÖSUNGEN, ENTHALTEND HYDROXYLAMIN-VERBINDUNGEN ALS VERNETZUNGSMITTEL**
DISPERSIONS OR SOLUTIONS CONTAINING HYDROXYLAMINE COMPOUNDS AS CROSS-LINKING AGENTS
DISPERSIONS OU SOLUTIONS CONTENANT DES COMPOSES HYDROXYLAMINE UTILISES COMME AGENTS DE RETICULATION

(30) Priorität: 13.06.1992 DE 4219384
(43) Veröffentlichungstag der Anmeldung: 29.03.1995
(73) Patentinhaber: BASF Aktiengesellschaft, 67063 Ludwigshafen (DE)
(72) Erfinder: BAUER, Gerhard, D-6940 Weinheim (DE); AYDIN, Oral, D-6800 Mannheim 1 (DE); BOTT, Kaspar, D-6800 Mannhein 1 (DE); NEUHAUSER, Horst, D-6724 Dudenhofen (DE); LEY, Gregor, D-6719 Wattenheim (DE); ZOSEL, Albrecht, D-6940 Weinheim (DE); WILD, Jochen, D-6701 Ruppertsberg (DE); HARREUS, Albrecht, D-6700 Ludwigshafen (DE); WISTUBA, Eckehardt, D-6702 Bad Duerkheim (DE)
(86) Internationale Anmeldenummer: EP9301395
(87) Internationale Veröffentlichungsnummer: WO9325588

(56) Entgegenhaltungen:
- EP-A- 0 516 074
- GB-A- 1 550 811

## Beschreibung

Die Erfindung betrifft eine Dispersion oder Lösung eines Polykondensats oder Polyaddukts, welches zu 0,001 bis 20 Gew.-% aus Aldehydgruppen -CHO oder Ketogruppen -CO- besteht, enthaltend als Vernetzungsmittel einer Verbindung mit mindestens zwei H₂N-O-Gruppen oder davon abgeleitete Oximethergruppen.

Die Erfindung betrifft auch eine Dispersion oder Lösung eines radikalischen Polymerisats, welches zu 0,001 bis 20 Gew.-% aus Aldenhydgruppen -CHO oder Ketogruppen -CO-besteht, enthaltend als Vernetzungsmittel eine Verbindung mit mindestens zwei Oximethergruppen, welche sich von H₂N-O-Gruppen ableiten.

Bei Copolymerisaten, welche in Beschichtungsmitteln oder Klebstoffen Verwendung finden, handelt es sich vielfach um vernetzungsfähige Copolymerisate. Durch eine Vernetzung können z.B. Schutzüberzüge oder Klebstoffbeschichtungen mit guten elastischen Eigenschaften, hoher Kohäsion, d.h. innere Festigkeit, hoher Chemikalien- und Lösemittelbeständigkeit erhalten werden.

Zur Vernetzung wird den Copolymerisaten im allgemeinen ein Vernetzungsmittel zugesetzt, das mit funktionellen Gruppen im Copolymerisat reagiert.

Mögliche Vernetzungsmittel sind z.B. Polyisocyanate, welche mit Hydroxyl- oder Aminogruppen reagieren.

Aus der DE-A-35 21 618 sind entsprechende wäßrige Klebstoffzubereitungen bekannt, bei denen in Wasser dispergierte Polyisocyanate wäßrigen Dispersionen radikalische polymerisierter Copolymerisate als Vernetzungsmittel zugesetzt werden. Ähnliche Klebstoffzubereitungen sind auch in der US-A 4 396 738 und DE-A-31 12 117 beschrieben.

Nachteilig bei diesen wäßrigen Zubereitungen ist jedoch die mangelnde Lagerstabilität. Das Polyisocyanat darf daher erst kurz vor seiner Verwendung als Vernetzungshilfsmittel in Wasser dispergiert und mit dem Copolymerisat gemischt werden.

Eine erhöhte Lagerstabilität kann durch Umsetzung der Isocyanatgruppen mit Blockierungsmitteln, z.B. Oximen, Caprolactam, Phenolen, Maleinsäuredialkylestern erreicht werden. Die erhaltenen sog. blockierten Polyisocyanate hydrolysieren in wäßriger Dispersion nur noch in untergeordnetem Ausmaß.

Gegenstand der DE-A-38 07 555 ist ein solches, mit Oximen blockiertes Diisocyanat, welches in Wasser dispergiert wird und sich als Zusatz für in Wasser dispergierte Polymerisate eignet.

Vernetzungsreaktionen treten jedoch erst nach Abspaltung des Blockierungsmittels bei Temperaturen ab ca. 130°C auf.

Bisher bekannte wäßrige Klebstoffzubereitungen mit Polyisocyanaten als Vernetzungshilfsmittel sind daher entweder nicht lagerstabil und können daher nur als 2-Komponentensystem Verwendung finden oder vernetzen erst bei hohen Temperaturen.

Lagerstabile, bei Raumtemperatur nach Entfernen des Lösungsmittels vernetzende wäßrige Dispersionen sind aus der EP-A-3516 bekannt. Diese Dispersionen enthalten Polyhydrazide, welche mit im Copolymerisat einpolymerisierten Monomeren mit Carbonylgruppen reagieren.

Aus der nicht vorveröffentlichten EP 516 074 sind Dispersionen von Copolymerisaten mit Keto- oder Aldehydgruppen bekannt, welche mit Aminoxyverbindungen vernetzen.

Aus GB 1 550 811 sind Oximetherverbindungen bekannt, welche als Photoinitiatoren Verwendung finden.

Grundsätzlich besteht ein Bedarf an weiteren, bei Raumtemperatur vernetzenden Dispersionen, um Alternativen zur Polyhydrazidvernetzung zu Verfügung stellen zu können. Des weiteren sollen diese Dispersionen gute anwendungstechnische Eigenschaften, z.B. eine gute Haftung, insbesondere Naßhaftung auf unterschiedlichsten Substraten, aufweisen.

Aufgabe der vorliegenden Erfindung waren daher lagerstabile Dispersionen oder Lösungen von vernetzbaren Copolymerisaten, welche ein Vernetzungsmittel enthalten und bei Raumtemperatur vernetzbar sind.

Demgemäß wurden die oben definierten Dispersionen oder Lösungen sowie ihre Verwendung als Beschichtungsmittel oder Klebstoff gefunden.

Die Vernetzung der Keto- oder Aldehydgruppen enthaltenden radikalischen Polymerisate, Polykondensate oder Polyaddukte mit den Vernetzungsmitteln, welche mindestens zwei H₂N-O-Gruppen oder davon abgeleitete Oximethergruppen enthalten, tritt bei Entfernung der flüssigen Phase der Dispersion oder Lösung ein und verläuft wahrscheinlich nach folgenden Schemen:
mit Hydroxylaminderivaten 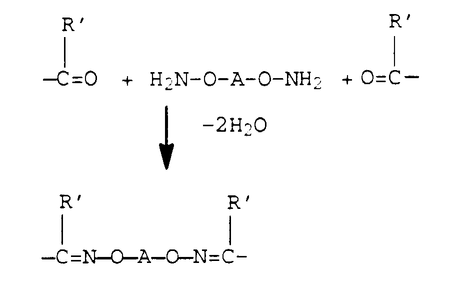 mit Oximethern

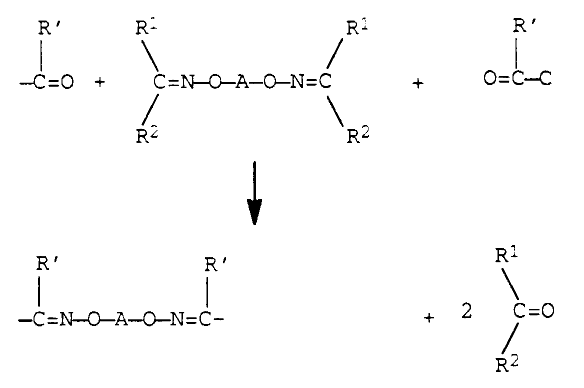

Bei der Verwendung von Vernetzungsmitteln mit H₂N-O-Gruppen oder davon abgeleiteten Oximethergruppen ergibt sich daher das gleiche, vernetzte Endprodukt. Im ersten Fall handelt es sich bei der Vernetzungsreaktion um eine Oximierung, im zweiten Fall um eine Umoximierung.

Weitere Ausführungen betreffen die Bestandteile der erfindungsgemäßen Dispersion oder Lösung, ihre Herstellung und Verwendung.

Die erfindungsgemäße Dispersion oder Lösung enthält ein Polymerisat, Polykondensat oder Polyaddukt, das zu 0,001 bis 20 Gew.-%, bevorzugt 0,01 bis 10 Gew.-% und ganz besonders bevorzugt zu 0,05 bis 3 Gew.-% aus Aldehydgruppen -CHO- oder Ketogruppen -CO- besteht.

Es kann sich dabei z.B. um ein radikalisch polymerisiertes Copolymerisat, ein Polyester als Polykondensat oder ein Polyurethan als Polyaddukt handeln.

Im Falle der radikalisch polymerisierten Copolymerisate sind die Aldehyd- oder Ketogruppen vorzugsweise durch ethylenisch ungesättigte Verbindungen, welche diese Gruppen enthalten, einpolymerisiert.

Vorzugsweise handelt es sich um ethylenisch ungesättigte Verbindungen mit ein oder zwei Aldehyd-, bzw. Ketogruppen oder einer Aldehyd- und einer Ketogruppe und einer radikalisch polymerisierbaren olefinischen Doppelbindung (Im weiteren Monomere a) genannt).

Im Falle eines Polyesters kann es sich z.B. um Monoalkohole, Diole, Monocarbonsäuren oder Dicarbonsäuren, im Falle eines Polyurethans kann es sich z.B. um Mono-, Diisocyanate oder ebenfalls Monoalkohoie oder Diole handeln, welche Aldehyd- oder Ketogruppen enthalten.

Als Monoalkohole genannt seien z.3. Hydroxyaceton, Hydroxybenzaldehyd, Acetoin und Benzoin.

Geeignete Monocarbonsäuren sind z.B. Ketocarbonsäuren, wie Brenztraubensäure oder Lävulinsäure.

Ferner können Verbindungen mit Aldehyd- oder Ketogruppen in die Polymerisate, Polykondensate oder Polyaddukte nicht nur als Bestandteil der Hauptkette, sondern auch durch Umsetzung mit reaktiven Gruppen in der Polymerhauptkette an die Polymerisate, Polykondensate oder Polyaddukte gebunden werden.

Bevorzugt ist ein radikalisch polymerisiertes Copolymerisat, welches aus den Monomeren a), welche Aldehyd- oder Ketogruppen enthalten, und weiteren Monomeren b) und c) besteht.

Als Monomere a) kommen z.B. Acrolein, Methacrolein, Vinylalkylketone mit 1 bis 20, vorzugsweise 1 bis 10 Kohlenstoffatomen im Alkylrest, Formylstyrol, (Meth-)acrylsäurealkylester mit ein oder zwei Keto- oder Aldehyd-, bzw. einer Aldehyd- und einer Ketogruppe Alkylrest, wobei der Alkylrest vorzugsweise insgesamt 3 bis 10 Kohlenstoffatome umfaßt, z.B. (Meth)acryloxyalkylpropanale, wie sie in der DE-A-27 22 097 beschrieben sind. Des weiteren eignen sich auch N-Oxoalkyl(meth)acrylamide wie sie z.B. aus der US-A-4 226 007, der DE-A-20 61 213 oder DE-A-22 07 209 bekannt sind.

Besonders bevorzugt sind Acetoacetyl(meth)acrylat, Acetoacetoxyethyl(meth)acrylat und insbesondere Diacetonacrylamid.

Die Hauptmonomeren b) sind in dem Copolymerisat insbesondere zu 20 bis 99,99, bevorzugt 60 bis 99,9 und besonders bevorzugt zu 80 bis 99,5 Gew.-%, bezogen auf das Copolymerisat, enthalten.

Als Monomere b) kommen Ester der Acryl- oder Methacrylsäure von 1 bis 20 C-Atome enthaltenden Alkylalkoholen in Frage. Als solche Alkohole seien genannt Methanol, Ethanol, n- oder 1-propanol, n-, s- und t-Butanol, n-Pentanol, Isoamylalkohol, n-Hexanol, Octanol, 2-Ethylhexanol, Lauryl- und Stearylalkohol.

Gute Ergebnisse weraen mit (Meth)-acrylsäurealkylestern mit einem C₁-C₁₀-Alkylrest, wie Methylmethacrylat, Methylacrylat, n-Butylacrylat, Ethylacrylat und 2-Ethylhexylacrylat erzielt.

Insbesondere sind auch Mischungen der (Meth)acrylsäurealkylester geeignet.

Weiterhin kommen Vinylester von Carbonsäuren mit 1 bis 20 C-Atomen wie Vinyllaurat, -stearat, Vinylpropionat und Vinylacetat in Betracht.
Als vinylaromatische Verbindungen mit bis zu 20 C-Atomen kommen Vinyltoluol, a- und p-Styrol, α-Butylstyrol, 4-n-Butylstyrol, 4-n-Decylstyrol und vorzugsweise Styrol in Betracht. Beispiele für ethylenisch ungesättigte Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und mindestens zwei konjugierten olefinischen Doppelbindungen seien Butadien, Isopren und Chloropren genannt.

Die Monomeren b) können insbesondere auch im Gemisch eingesetzt werden, vor allem, um gewünschte Glasübergangstemperaturen des Copolymerisats einzustellen.

Als weitere, d.h. nicht unter a) und b) fallende, copolymerisierbare Monomere c) kommen z.B. Ester der Acryl- und Methacrylsäure von Alkoholen mit 1 bis 20 C-Atomen, die außer dem Sauerstoffatom in der Alkoholgruppe mindestens ein weiteres Heteroatom enthalten und/oder die einen aliphatischen oder aromatischen Ring enthalten, in Betracht.

Genannt seien z.B. 2-Ethoxyethylacrylat, 2-Butoxyethyl(meth)- acrylat, Dimethylaminoethyl(meth)acrylat, Diethylaminoethyl(meth)acrylat, (Meth)acrylsäurearyl-, -alkaryl- oder cycloalkylester, wie Cyclohexyl(meth)acrylat, Phenylethyl(meth)-acrylat, Phenylpropyl(meth)acrylat- oder Acrylsäureester von heterocyclischen Alkoholen wie Furfuryl(meth)acrylat.

Darüber hinaus seien noch weitere Comonomere wie (Meth)acrylamid sowie deren am Stickstoff mit C₁-C₄-Alkyl substituierten Derivate genannt.

Von besonderer Bedeutung sind auch hydroxyfunktionelle Comonomere, z.B. (Meth)acrylsäure-C₁-C₁₅-alkylester, welche durch ein oder zwei Hydroxygruppen substituiert sind. Insbesondere von Bedeutung als hydroxyfunktionelle Comonomere sind (Meth)acrylsäure-C₁-C₈-Hydroxyalkylester, wie n-Hydroxyethyl-, n-Hydroxypropyl- oder n-Hydroxybutyl(meth)acrylat.

Die Mitverwendung von Comonomeren mit salzbildenden Gruppen empfiehlt sich z.B. für die Herstellung selbstdispergierbarer Copolymerisate, die z.B. für wäßrige Sekundär-dispersionen geeignet sind. Comonomere mit salzbildenden Gruppen sind insbesondere Itaconsäure, Acrylsäure und Methacrylsäure.

Der Gewichtsanteil der weiteren Comonomeren im Copolymerisat kann insbesondere 0 bis 50 %, vorzugsweise 0 bis 20 % und ganz besonders bevorzugt 0 bis 10 Gew.-% betragen.

Die Anteile der Monomeren a), b) und c) addieren sich zu 100 Gew.-%.

Der Anteil der Monomeren a) wird dabei so gewählt, daß der oben angegebene Gehalt an Aldehyd- oder Ketogruppen im Copolymerisat vorliegt.

Die Herstellung des Copolymerisats erfolgt durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt, wobei das Copolymerisat als wäßrige Dispersion erhalten wird.

Die Comonomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.3. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate.

Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wäßrigen Sekundär-dispersionen ist dem Fachmann bekannt und z.B. in der DE-A-37 20 860 beschrieben.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan.

Die Art und Menge der Comonomeren wird zweckdienlicherweise so gewählt, daß das erhaltene Copolymerisat eine Glasübergangstemperatur zwischen bevorzugt -60 und +140°C. Je nachdem, ob harte oder weiche Beschichtungen gewünscht sind, werden durch Wahl der Monomeren hohe oder tiefe Glasübergangstemperaturen eingestellt. Die Glasübergangstemperatur des Copolymerisats läßt sich nach üblichen Methoden wie Differentialthermoanalyse oder Differential Scanning Calorimetrie (s. z.B. ASTM 3418/82, sog. "midpoint temperature") bestimmen.

Die erfindungsgemäße Dispersion oder Lösung eines Polykondensats oder Polyaddukts enthält weiterhin als Vernetzungsmittel eine Verbindung mit mindestens zwei H₂N-O-Gruppen oder davon abgeleiteten Oximethergruppen; die erfindungsgemäße Dispersion oder Lösung eines radikalischen Polymerisats enthält eine Verbindung mit mindestens zwei Oximethergruppen, welche sich von H₂N-O-Gruppen ableiten. Bei Oximen handelt es sich, wie allgemein bekannt, um die Umsetzungsprodukte von Verbindungen mit Keto- oder Aldehydgruppen mit Hydroxylaminderivaten. Bei diesem Vernetzungsmittel kann es sich um eine aliphatische, cycloaliphatische oder aromatische Verbindung handeln.

Vorzugsweise handelt es sich um ein Hydroxylaminderivat der allgemeinen Formel

(H₂N-O)̵ₙA I,

worin A für einen gesättigten oder ungesättigten aliphatischen, linearen oder verzweigten Kohlenwasserstoffrest aus 2 bis 12 Kohlenstoffatomen, welcher durch 1 bis 3 nicht benachbarte Sauerstofftome unterbrochen sein kann, und n für 2, 3, oder 4 steht,
oder einen Oximether der Formel 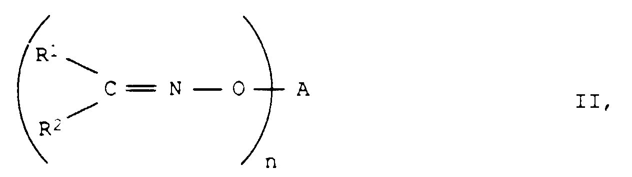 worin A und n die oben genannte Bedeutung haben und R¹ und R² unabhängig voneinander für einen C₁-C₁₀-Alkyl, einen C₁-C₁₀-Alkoxy-, einen C₅-C₁₀-Cycloalkyl- oder einen C₅-C₁₀-Arylrest, welche auch 1 bis 3 nicht benachbarte Stickstoff-, Sauerstoff- oder Schwefelatome in der Kohlenstoffkette oder im Kohlenstoffring enthalten und durch 1 bis 3 C₁-C₄-Alkyl- oder -Alkoxygruppen substituiert sein können, stehen, R¹ oder R² für ein Wasserstoffatom stehen können,
oder R¹ und R² gemeinsam eine Brücke aus 2 bis 14 Kohlenstoffatomen bilden, wobei ein Teil der Kohlenstoffatome auch Bestandteil eines aromatischen Ringsystems sein kann.

Bei der Variablen A in Formeln I und II handelt es sich bevorzugt um eine Kohlenwasserstoffkette aus 2 bis 8 Kohlenstoffatomen und n ist vorzugsweise gleich 2.

Die Reste R¹ und R² stehen jeweils bevorzugt für ein Wasserstoffatom, eine C₁- bis C₆-Alkylgruppe oder eine C₁- bis C₆-Alkoxygruppe. Im Falle des Wasserstoffatoms kann nur einer der Reste R¹ oder R² für ein Wasserstoffatom stehen.

Die Herstellung der Verbindungen mit der Formel I ist z.B. von Dabney White Dixon und Randy H. Weiss bzw. Ludwig Bauer und K.S. Luresch in Journal of Organic Chemistry, Band 49 (1984), Seiten 4487 bis 4494 bzw. Band 28 (1963), Seiten 1604 bis 1608 beschrieben.

Demnach können die Hydroxylaminderivate z.B. durch Umsetzung von dibromierten Verbindungen mit N-Hydroxyphthalimid durch Substitution der Bromatome in Phthalimidooxyderivate überführt werden, aus denen dann durch Hydrolyse die Hydroxylaminderivate entstehen.

Die Hydroxylaminderivate sind auch über Oximether als Zwischenstufe erhältlich. (Zh. Org. Khim., Band 24 (1988), Seite 2538 und J. Med. Chem. Band 7 (1964), Seite 329).

Während Hydroxylaminderivate der Formel I im allgemeinen mit einer mehr oder weniger aufwendigen Schutzgruppentechnik hergestellt werden, sind die entsprechenden Oximether der Formel II direkt durch Umsetzung der Alkalisalze von Oximen mit Dihalogenverbindungen zugänglich. Zh. Org. Khim., Band 24, 1988, Seite 2538 ff).

Von besonderem Vorteil ist dabei die Umsetzung des Oxims mit einer Dihalogenverbindung in wäßriger Natronlauge in Gegenwart eines Phasentransferkatalysators, z.B. Tetrahexylammoniumchlorid, wobei kein Lösungsmittel verwendet werden muß.

Vorzugsweise beträgt der Gewichtsanteil des Vernetzungsmittels mit mindestens zwei H₂N-O-Gruppen oder davon abgeleiteten Oximethergruppen 0,01 bis 30 Gew.-%, besonders bevorzugt 0,1 bis 20 Gew.-%, ganz besonders bevorzugt 0,1 bis 5 Gew.-%, bezogen auf das Polymerisat bzw. Polykondensat oder Polyaddukt. Vorteilhafterweise wird der Gehalt an Vernetzungsmittel so gewählt, daß die H₂N-O-Gruppen und/oder Oximethergruppen im ungefähr äquimolaren Verhältnis zu den Keto- und/oder Aldehydgruppen vorliegen.

Der Feststoffgehalt der erfindungsgemäßen Dispersionen oder Lösungen liegt bevorzugt zwischen 20 und 90 Gew.-%, insbesondere zwischen 30 und 70 Gew.-%.

Die erfindungsgemäßen Dispersionen oder Lösungen eignen sich als Beschichtungsmittel für unterschiedliche Substrate mit Kunststoff-, Holz- oder Metalloberflächen oder z.B. für Textilien, Fliesstoffe, Leder oder Papier. Sie eignen sich ebenfalls für Anwendungen in der Bauchemie z.B. als Klebstoffe, Dichtungsmassen, Bindemittel oder ähnliches. Bei den Beschichtungen kann es sich z.B. um Anstriche, Schutzüberzüge oder Klebstoffbeschichtungen handeln.

Insbesondere ist für die genannte Verwendung die erfindungsgemäße wäßrige Dispersion eines radikalisch polymerisierten Copolymerisats geeignet.

Die wäßrigen Dispersionen können auch organische, vorzugsweise mit Wasser mischbare Lösungsmittel als Hilfslösungsmittel enthalten.

Die erfindungsgemäßen Dispersionen oder Lösungen können je nach Verwendungszweck übliche Hilfs- und Zusatzmittel enthalten. Hierzu gehören beispielsweise Füllstoffe wie Quarzmehl, Quarzsand, hochdisperse Kieselsäure, Schwerspat, Calciumcarbonat, Kreide, Dolomit oder Talkum, die oft zusammen mit geeigneten Netzmitteln wie z.B. Polyphosphaten wie Natriumhexamethaphosphat, Naphthalinsulfonsäure, Ammonium- oder Natriumpolyacrylsäuresalze eingesetzt werden, wobei die Netzmittel im allgemeinen von 0,2 bis 0,6 Gew.-%, bezogen auf den Füllstoff, zugesetzt werden.

Fungizide zur Konservierung werden, falls gewünscht im allgemeinen in Mengen von 0,02 bis 1 Gew.-%, bezogen auf die gesamte Dispersionen oder Lösung eingesetzt. Geeignete Fungizide sind beispielsweise Phenol- oder Kresol-Derivate oder zinnorganische Verbindungen.

Besonders eignet sich die erfindungsgemäßen Dispersionen oder Lösungen, insbesondere die erfindungsgemäße wäßrige Dispersion eines radikalischen Copolymerisats, als Dichtstoff oder Klebstoff, insbesondere z.B. als Kaschierklebstoff zur Herstellung von Verbundfolien und Glanzfolien. Als Klebstoff können die Dispersionen neben obengenannten Zusatzstoffen noch spezielle, in der Klebstofftechnologie übliche Hilfs- und Zusatzmittel enthalten. Hierzu gehören beispielsweise Verdickungsmittel, Weichmacher oder auch klebrigmachende Harze wie z.B. Naturharze oder modifizierte Harze wie Kolophoniumester oder synthetische Harze wie Phthalatharze.

Dispersionen, welche als Klebstoff Verwendung finden, enthalten besonders bevorzugt Alkyl(meth)acrylate als Comonomere b) im Copolymerisat.

Die Glasübergangstemperatur der Copolymerisate wird bei der Verwendung als Klebstoffzubereitung bevorzugt auf Werte zwischen 0 und -40°C eingestellt.

Die Dispersionen zeigen bei der Verwendung als Klebstoff überraschend auch eine sehr gute Haftung, insbesondere Naßhaftung.

Der pH-Wert der Dispersion wird bevorzugt auf einen Wert zwischen 2 und 9 eingestellt, da die Vernetzungsreaktion mit den Copolymerisaten sauer katalysiert werden kann.

Die erfindungsgemäße Dispersion oder Lösung ist lagerstabil. Die Vernetzungsreaktion tritt schon bei Raumtemperatur bei Entfernen der flüssigen Phase, z.B. Verflüchtigung des Wassers ein.

Durch Temperaturerhöhung z.B. auf 30 bis 100°C kann die Verflüchtigung des Wassers beschleunigt werden.

Bei der Beschichtung von Substraten ist es prinzipiell auch möglich, eine Dispersion oder Lösung des Polymerisats bzw. Polykondensats oder Polyaddukts, welche die Hydroxylamine oder Oximetherderivate nicht enthält, auf eine Oberfläche aufzutragen, auf die bereits vorher in einem getrennten Arbeitsgang Hydroxylamine bzw. Oximether aufgebracht wurden.

In diesem Fall wirken die Hydroxylamine oder Oximetherderivate als sog. Primer.

Nach Auftragen der Dispersion oder Lösung tritt dann die Vernetzung wie oben ein.

### Beispiele

### I Hydroxylaminderivate als Vernetzer

### Herstellung der Copolymerisate

### Copolymerisatdispersion 1

In einem Reaktionsgefäß mit Rührer und zwei Zulaufgefäßen (Zulauf 1 und Zulauf 2) wurden 200 g entsalztes Wasser, 37 g des Zulaufs 1 (siehe unten) und 20 g des Zulaufs 2 vorgelegt und auf 95°C erwärmt. Nach 15 Minuten wurde innerhalb von 2 h gleichmäßig der Zulauf 1 sowie innerhalb von 2,5 h gleichmäßig der Zulauf 2 zum Reaktionsgefäß zugegeben. Nach der letzten Initiator-Zugabe (Zulauf 2) wurde die Dispersion noch 1 Stunde bei 85°C gerührt.

### Zulauf 1: (dieser Zulauf wird während der Polymerisation gerührt)

| | |
|---|---|
| 107,5 g | entsalztes Wasser |
| 400 g | Ethylacrylat |
| 90 g | Methylmethacrylat |
| 50 g | 20 gew.-%ige wäßrige Diacetonacrylamid-Lösung |
| 50 g | 20 gew.-%ige Lösung des Natriumsalzes vom p-Dodecyldiphenyletherdisulfonat in Wasser (Emulgator) |
| 50 g | 20 gew.-%ige Lösung des Umsetzungsprodukts |
| von | p-Isononylphenol mit ca. 50 Mol Ethylenoxid in Wasser (Emulgator) |

### Zulauf 2:

| | |
|---|---|
| 100 g | entsalztes Wasser |
| 3 g | Natriumpersulfat |

Copolymerisatdispersionen 2 bis 6 wurden entsprechend hergestellt (Tabelle 1).

**Tabelle 1:**

| Zusammensetzung der Copolymerisate in Gew.-% | | | | | |
|---|---|---|---|---|---|
| Copolymerisat-dispersion | EA | MMA | HEA | DAA | AAEM |
| 1 | 80 | 18 | | 2 | |
| 2 | 99 | | | 1 | |
| 3 | 96 | | | 4 | |
| 4 | 77,7 | 17,4 | | | 4,9 |
| 5 | 80 | 18 | 2 | | |
| 6 | 99 | | 1 | | |

### Abkürzungen

- EA:: Ethylacrylat
- MMA:: Methylmethacrylat
- HEA:: Hydroxyethylacrylat
- DAA:: Diacetonacrylamid
- AAEM:: Acetoacetoxyethylmethacrylat

Den erhaltenen Dispersionen wurden die Hydroxylaminderivate

A: H₂N-O-(CH₂)₂-O-NH₂

B: H₂N-O-(CH₂)₄-O-NH₂

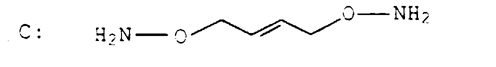

in äquimolaren Mengen der Aminogruppen, bezogen auf die Aldehyd- bzw. Ketogruppen zugesetzt.

Die Herstellung der Substanzen A bis C ist in J. Org. Chem. 28, S. 1604 (1963) von L. Bauer und K.S. Suresh beschrieben.

Die erhaltenen Mischungen waren lagerstabil.

Prüfung auf Vernetzbarkeit (Quellung) und anwendungstechnische Prüfung (Glanzfolienprüfung)

### Quellung

Die Dispersionszubereitungen wurden verfilmt und die Filme 1 Woche bei Raumtemperatur getrocknet. Anschließend wurde das Quellungsverhalten als Maß für den Vernetzungsgrad dieser Filme in Tetrahydrofuran untersucht, indem ca. 1 g der verfilmten Proben in Toluol und DMF 2 Tage gelagert und die Lösungsmittelaufnahme in % gemessen wurde.

Mit zunehmender Vernetzungsdichte kommt es zu einer Abnahme der Lösungsmittelaufnahme bei der Quellung.

Nicht oder Kaum vernetzte Polymere werden aufgelöst oder quellen aufgrund der außerordentlich geringen Vernetzungsdichte übermäßig stark an.

(Ergebnisse in Tab. 2).

### Glanzfolienprüfung

Die Dispersionszubereitungen wurden mit einer Trockenschichtdicke von 5 g/m² auf mit Offsetfarben bedruckten Kartonagen gerakelt, bei 60°C getrocknet und nach ca. 30 sec mit biaxial verstreckten Polypropylenfolien (o-PP) kaschiert.

Es wurde geprüft, ob es beim Abreißen der Folie (Schälprüfung) zu einem Papier- und Farbausriß von der Kartonage kommt (Note 1: vollständiger Papier- oaer Farbausriß, Note 2: teilweiser Papier- oder Farbausriß) und ob sich im Bereich von Nuten (Prägungen in der Kartonage) die Folie ablöst bzw. nicht fest anliegt (Nutstandfestigkeit; + = keine Ablösung an der Nut, - = Ablösung an der Nut und +/- = teilweise Ablösung an der Nut).

(Ergebnisse in Tab. 2).

**Tabelle 2**

| Dispersion | Vernetzer | Lösungsmittelaufnahme % | Schälprüfung | Nutstandfestigkeit |
|---|---|---|---|---|
| 1 | A | 500 | 1 | + |
| 2 | A | 580 | 1 | + |
| 3 | A | 490 | 1 | + |
| 4 | A | 560 | 1 | + |
| 1 | B | 520 | 1 | + |
| 2 | B | 490 | 1 | + |
| 3 | B | 500 | 1 | + |
| 4 | B | 570 | 1 | + |
| 1 | C | 560 | 1 | + |
| 3 | C | 580 | 1 | + |
| zum Vergleich | | | | |
| 5 | A | 1000* | 1 | +/- |
| 5 | B | 1100* | 1 | +/- |
| 6 | A | 1600* | 1 | +/- |
| 6 | B | 1500* | 1 | +/- |
| 1 | - | -* | 2 | - |
| 3 | - | -* | 2 | - |

| | | | | |
|---|---|---|---|---|
| * Probe war zum großen Teil aufgelöst | | | | |

### Herstellung von Dispersionsfarben

Als Polymere zur Herstellung von Dispersionsfarben wurden eingesetzt (Teile sind gewichtsteile):

| Polymerdispersion | Zusammensetzung |
|---|---|
| 7 (Vergleich): | Copolymerisat aus 50 Teilen (T1) Methylmethacrylat und 50 Tl n-Butylacrylat |
| 8 (Vergleich): | Copolymerisat und Vernetzer aus 50 T1 Methylmethacrylat, 45 Tl Ethylmethacrylat, 3 Tl Diacetonacrylamid (Copolymerisat) und zusätlich 2 Tl Adipinsäuredihydrazid (Vernetzer) |
| 9: | Copolymerisat und Vernetzer aus 51 Tl Methylmethacrylat, 43 Tl n-Butylacrylat, 4 Tl Diacetonacrylamid (Copolymerisat) und 2 Tl Hydroxylaminderivat A (Vernetzer) |

Mit den Polymerdispersionen wurden gemäß folgender Rezeptur Dispersionsfarben hergestellt.

| Bestandteile | Gew.-teile |
|---|---|
| Polyurethanverdicker 25 gew.-%ig in Wasser/Butyldiglykol (1:4) | 10,0 |
| Na-Salz eines Acrylsäurepolymeren (Pigmentdispergierhilfsmittel) | 8,0 |
| Ammoniak konz. | 0,2 |
| Konservierungsmittel | 0,2 |
| Entschäumer auf Siliconbasis | 0,3 |
| TiO₂ | 22,3 |
| Propylenglykol | 9,9 |
| Butyldiglykol | 2,5 |
| Isopropylethylenglykol | 1,2 |
| Wasser | 1,6 |
| Polymerdisp. 50 gew.-%ig | 54 |

Die Dispersionsfarben wurden auf Naßhaftung und Glanz geprüft:

### Naßhaftungsprüfung

Der Dispersionslack wurde auf einen mit einem Alkydlack beschichteten Prüfkörper in einer Naßschichtdicke von 200 µm aufgezogen. Nach 3 Tagen Trocknung bei 23°C/65 % rel. Luftfeuchtigkeit wurde der Prüfkörper bei Raumtemperatur 8 Stunden in Wasser gestellt, 16 Stunden bei -20°C eingefroren und dann 10 min in Wasser bei 23°C gestellt.

Geprüft wurde die Haftung des Dispersionslack auf dem Alkydlack. Dazu wurde mit dem Fingernagel versucht, den Dispersionslack abzuziehen.

Sehr gute Naßhaftung liegt vor, wenn sich der Dispersionslack nicht abziehen läßt, keine Naßhaftung liegt vor, wenn er sich vollständig abziehen läßt.

| Eigenschaften der Dispersionslackfarbe | 7 | 8 | 9 |
|---|---|---|---|
| Naßhaftung | keine | befriedigend* | sehr gut |

| | | | |
|---|---|---|---|
| * Lack läßt sich teilweise abziehen | | | |

### II Oximether als Vernetzer

### Herstellung der Oximether

### Acetonoxim-(1,4-butylen)-ether

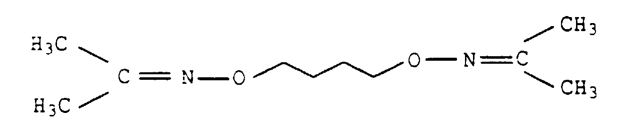

Eine Mischung aus 75,0 g einer 40 %igen Natronlauge, 32,0 g (0,25 mol) 1,4-Dichlorbutan, 36,5 g (0,50 mol) Acetonoxim und 1,0 g Tetrahexylammoniumchlorid wird 7 h zum Rückfluß erhitzt. Die Reaktionsmischung verdünnt man mit 100 ml Wasser, um das ausgefallene Natriumchlorid zu lösen, und trennt die obere Phase mit dem Wertprodukt in einem Scheidetrichter ab. Letztere enthält 37 g (74 % Ausbeute) Acetonoxim-(1,4-butylen)-ether, der durch Destillation i.Vak. gereinigt wird; Sdp. = 119 bis 121°C bei 18 mbar.

In entsprechender Weise wurden die Oximether der Tabelle 3 hergestellt (R¹, R² und A entsprechend Formel I).

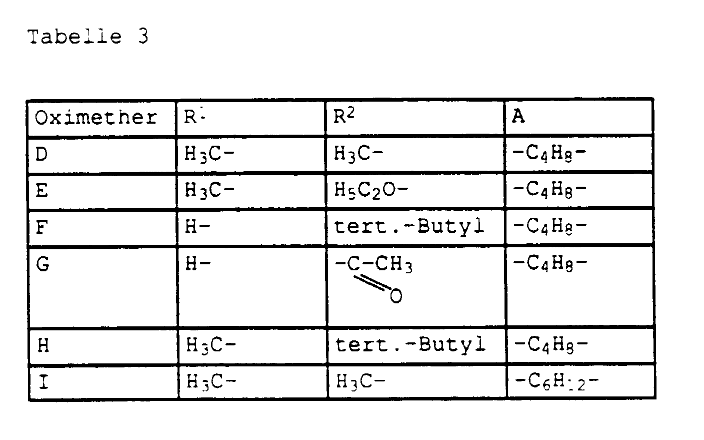

### Herstellung von Copolymerisatdispersionen

Die Herstellung erfolgte wie unter I beschrieben. Die Zusammensetzung der Copolymerisate ist in Tab. 4 wiedergegeben.

**Tabelle 4**

| Zusammensetzung des Copolymerisats in Gew.-% | | | | | |
|---|---|---|---|---|---|
| Copolymerisatdispersion | EA | MMA | HEA | DAA | AAEM |
| 10 | 96 | | | 4 | |
| 11 | 77,7 | 17,4 | | | 4,9 |
| 12 | 96 | | 2 | 2 | |

Prüfung auf Vernetzbarkeit (Quellung) und anwendungstechnische Prüfung

Den Dispersionen wurden jeweils Oximether D-I zugesetzt, wobei die Oximgruppen zu den Keto- bzw. Aldehydgruppen äquimolar waren.

Die erhaltenen Dispersionszubereitungen waren lagerstabil.

Zur Herstellung von Verbundflächen wurden die Dispersionszubereitungen mit einer Trockenschichtdicke von 3 g/m² auf verschiedene auf 50°C erwärmte Folien (Polyethylenterephthalat: PETP; Polyamid: PA; Polyvinylchlorid: PVC; Polypropylen (coronavorbehandelt): PP gerakelt, und nach 20 sec. mit einer Polyethylenfolie (coronavorbehandelt) kaschiert. Anschließend wurden die Folien 7 Tage bei Raumtemperatur und Normalklima gelagert und danach in 2 cm breite Streifen zerschnitten. Diese Streifen wurden dann bei 23°C im Winkel von 180°C mit einer Geschwindigkeit von 100 m/min abgezogen. Es wurde die Schälkraft in N bei den 2 cm breiten Streifen bestimmt. (Tabelle 5)

**Tabelle 5**

| | | | Schälfestigkeit der Verbund-folie in N/cm | | | |
|---|---|---|---|---|---|---|
| Dispersion | Vernetzer | Lösungsmittelaufnahme % | PETP/PE | PA/PE | PVC/PE | PP/PE |
| 10 | E | 1000 | 3,5 | 2,0 | 4,7 | 1,9 |
| 10 | F | 980 | 3,1 | 2,3 | 4,3 | 2,3 |
| 10 | D | 700 | 4,1 | 2,7 | 4,9 | 2,5 |
| 10 | G | 1200 | 2,9 | 2,4 | 4,0 | 2,3 |
| 10 | H | 1000 | 3,0 | 2,8 | 4,2 | 2,1 |
| 10 | I | 1100 | 3,9 | 2,4 | 4,5 | 1,9 |
| | | | | | | |
| 11 | E | 900 | 3,1 | 2,1 | 4,3 | 1,0 |
| 11 | F | 970 | 3,2 | 2,3 | 4,0 | 1,2 |
| 11 | D | 750 | 4,6 | 2,9 | 4,8 | 1,9 |
| 11 | G | 1150 | 3,5 | 2,4 | 4,2 | 1,8 |
| 11 | H | 900 | 3,1 | 2,3 | 4,1 | 1,6 |
| 11 | I | 1050 | 3,7 | 2,4 | 4,4 | 1,5 |
| | | | | | | |
| 12 | E | 1100 | 3,1 | 2,4 | 4,0 | 1,3 |
| 12 | F | 1000 | 3,5 | 2,1 | 4,3 | 1,7 |
| 12 | D | 750 | 4,7 | 2,9 | 4,8 | 1,9 |
| 12 | G | 1150 | 3,9 | 2,0 | 4,2 | 1,4 |
| 12 | H | 1040 | 4,0 | 2,3 | 4,1 | 1,3 |
| 12 | I | 1100 | 3,3 | 2,2 | 4,4 | 1,7 |
| | | | | | | |
| zum Vergleich | | | | | | |
| 10 | - | -* | 0,5 | 0,9 | 0,6 | 0,1 |
| 11 | - | -* | 0,5 | 0,3 | 0,4 | 0,1 |
| 12 | - | -* | 0,5 | 0,2 | 0,4 | 0,1 |

| | | | | | | |
|---|---|---|---|---|---|---|
| * Das Polymer war zum großen Teil aufgelöst | | | | | | |

Ebenfalls angegeben ist die wie unter I gemessene Lösungsmittelaufnahme als Maß für die Vernetzbarkeit.

## Patentansprüche

1. Dispersion oder Lösung eines Polykondensats oder Polyaddukts, welches zu 0,001 bis 20 Gew.-% aus Aldehydgruppen -CHO oder Ketogruppen -CO- besteht, enthaltend als Vernetzungsmittel eine Verbindung mit mindestens zwei H₂N-O-Gruppen oder davon abgeleitete Oximethergruppen.

2. Dispersion oder Lösung nach Anspruch 1, enthaltend mindestens ein Hydroxylaminderivat der allgemeinen Formel
(H₂N-O)̵ₙA I,
worin A für einen gesättigten oder ungesättigten aliphatischen, linearen oder verzweigten Kohlenwasserstoffrest aus 2 bis 12 Kohlenstoffatomen, welcher durch 1 bis 3 nicht benachbarte Sauerstoffatome unterbrochen sein kann, und n für 2, 3, oder 4 steht,
oder mindestens einen Oximether der Formel 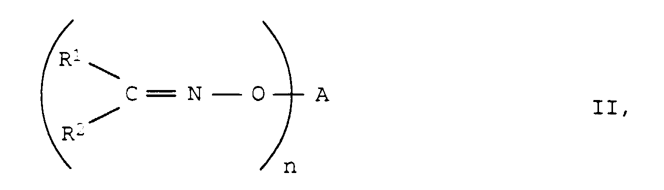 worin A und n die oben genannte Bedeutung haben und R¹ und R² unabhängig voneinander für einen C₁-C₁₀-Alkyl-, C₁-C₁₀-Alkoxy-, C₅-C₁₀-Cycloalkyl- oder C₅-C₁₀-Arylrest, welche auch 1 bis 3 nicht benachbarte Stickstoff-, Sauerstoff- oder Schwefelatome als Heteroatome in der Kohlenstoffkette oder Kohlenstoffring enthalten und durch 1 bis 3 C₁-C₄-Alkyl- oder -Alkoxygruppen substituiert sein können, stehen, R¹ oder R² für ein Wasserstoffatom stehen können, oder R¹ und R² gemeinsam eine Brücke aus 2 bis 14 Kohlenstoffatomen bilden, wobei ein Teil der Kohlenstoffatome auch Bestandteil eines aromatischen Ringsystems sein kann.

3. Dispersion oder Lösung eines radikalischen Polymerisats, welches zu 0,001 bis 20 Gew.-% aus Aldehydgruppen -CHO oder Ketogruppen -CO- besteht, enthaltend als Vernetzungsmittel eine Verbindung mit mindestens zwei Oximethergruppen, welche sich von H₂N-O-Gruppen ableiten.

4. Dispersion oder Lösung nach Anspruch 3, enthaltend mindestens einen Oximether der Formel II.

5. Dispersion oder Lösung nach Anspruch 3 oder 4, enthaltend Copolymerisate mit einer Glasübergangstemperatur zwischen -60 und +140°C, wobei das Copolymerisat aus
a) mindestens einem Comonomeren mit mindestens einer Aldehyd- oder Ketogruppe,
b) 20 bis 99,99 Gew.-% mindestens eines C₁- bis C₂₀-Alkyl(meth)acrylats, eines Vinylesters von 1 bis 20 C-Atome enthaltenden Carbonsäuren, eines Vinylaromaten mit bis zu 20 C-Atomen, eines ethylenisch ungesättigten Nitrils mit 3 bis 6 C-Atomen, eines Vinylhalogenids oder eines nichtaromatischen Kohlenwasserstoffs mit 4 bis 8 C-Atomen und mindestens 2 konjugierten Doppelbindungen, und
c) 0 bis 50 Gew.-% mindestens eines weiteren ethylenisch ungesättigten Monomeren besteht, wobei der Gehalt des Monomeren a) so gewählt wird, daß das Copolymerisat zu 0,001 bis 20 Gew.-% aus Carbonylgruppen -CHO- oder Ketogruppen -CO- besteht und die Monomeren a), b) und c) sich zu 100 Gew.-% addieren.

6. Verwendung einer Dispersion oder Lösung nach einem der Ansprüche 1 bis 5 als Beschichtungsmittel.

7. Verwendung einer Dispersion oder Lösung nach einem der Ansprüche 1 bis 5 als Klebstoff.

8. Beschichtete Substrate, erhältlich unter Verwendung einer Dispersion oder Lösung nach einem der Ansprüche 1 oder 2.

## Claims

1. A dispersion or solution of a polycondensate or polyadduct, which consists of from 0.001 to 20% by weight of aldehyde groups -CHO or keto groups -CO- and contains, as a crosslinking agent, a compound having at least two H₂N-O- groups or oxime ether groups derived therefrom.

2. A dispersion or solution as claimed in claim 1, containing at least one hydroxylamine derivative of the formula
(H₂N-O)̵ₙA I
where A is a saturated or unsaturated aliphatic, linear or branched hydrocarbon radical of 2 to 12 carbon atoms which may be interrupted by from 1 to 3 nonadjacent oxygen atoms and n is 2, 3 or 4,
or at least one oxime ether of the formula 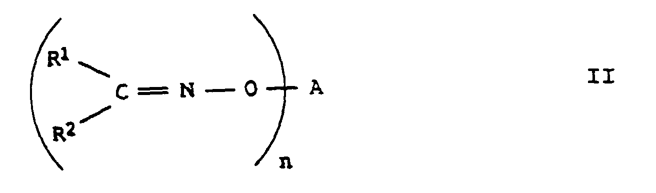 where A and n have the abovementioned meanings and R¹ and R², independently of one another, are each C₁-C₁₀-alkyl, C₁-C₁₀-alkoxy, C₅-C₁₀-cycloalkyl or C₅-C₁₀-aryl, each of which may furthermore contain from 1 to 3 nonadjacent nitrogen, oxygen or sulfur atoms as hetero atoms in the carbon chain or in the carbon ring and may be substituted by from 1 to 3 C₁-C₄-alkyl or C₁-C₄-alkoxy groups, R¹ or R² may be hydrogen or R¹ and R² together form a bridge of 2 to 14 carbon atoms, where some of the carbon atoms may also be part of an aromatic ring system.

3. A dispersion or solution of a free radical polymer which consists of from 0.001 to 20% by weight of aldehyde groups -CHO or keto groups -CO- and contains, as a crosslinking agent, a compound having at least two oxime ether groups which are derived from H₂N-O- groups.

4. A dispersion or solution as claimed in claim 3, containing at least one oxime ether of the formula II.

5. A dispersion or solution as claimed in claim 3 or 4, containing a copolymer having a glass transition temperature from -60 to +140°C, wherein the copolymer consists of
a) at least one comonomer having at least one aldehyde or keto group,
b) from 20 to 99.99% by weight of at least one C₁-C₂₀-alkyl (meth)acrylate, one vinyl ester of a carboxylic acid of 1 to 20 carbon atoms, one vinylaromatic of up to 20 carbon atoms, one ethylenically unsaturated nitrile of 3 to 6 carbon atoms, one vinyl halide or one nonaromatic hydrocarbon having 4 to 8 carbon atoms and at least 2 conjugated double bonds and
c) from 0 to 50% by weight of at least one further ethylenically unsaturated monomer,
the content of the monomer a) being chosen so that the copolymer consists of from 0.001 to 20% by weight of aldehyde groups -CHO or keto groups -CO-, and the monomers a), b) and c) summing to 100% by weight.

6. Use of a dispersion or solution as claimed in any of claims 1 to 5 as a coating material.

7. Use of a dispersion or solution as claimed in any of claims 1 to 5 as an adhesive.

8. A coated substrate obtainable using a dispersion or solution as claimed in claim 1 or 2.

## Revendications

1. Dispersion ou solution d'un produit de polycondensation ou d'un produit de polyaddition qui se compose, pour 0,001 à 20% en poids, de groupements aldéhyde -CHO ou de groupements cétone -CO-, contenant, en tant que réticulant, un composé qui comporte au moins deux groupements H₂N-O ou deux groupements éther d'oxime dérivés de ceux-ci.

2. Dispersion ou solution selon la revendication 1, contenant au moins un dérivé d'hydroxylamine de formule générale
(H₂N-O)̵ₙ-A I
dans laquelle A est mis pour un reste hydrocarboné aliphatique saturé ou insaturé, linéaire ou ramifié, à 2-12 atomes de carbone, qui peut être interrompu par 1 à 3 atomes d'oxygène non voisins, et n est mis pour 2, 3 ou 4,
ou au moins un éther d'oxime de formule 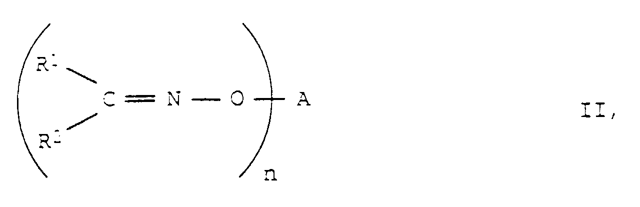 dans laquelle A et n ont les significations données ci-dessus et R¹ et R² sont mis chacun, indépendamment l'un de l'autre, pour un reste alkyle en C₁-C₁₀, alcoxy en C₁-C₁₀, cycloalkyle en C₅-C₁₀ ou aryle en C₅-C₁₀, qui peut contenir 1 à 3 atomes d'azote, d'oxygène ou de soufre non voisins en tant qu'hétéroatomes dans la chaîne carbonée ou le cycle carboné et qui peut être substitué par 1 à 3 groupements alkyle ou alcoxy en C₁-C₄, R¹ ou R² pouvant être mis pour un atome d'hydrogène, ou R¹ et R² forment en commun un pont de 2 à 14 atomes de carbone, une partie des atomes de carbone pouvant aussi faire partie d'un système cyclique aromatique.

3. Dispersion ou solution d'un produit de polymérisation radicalaire qui se compose, pour 0,001 à 20% en poids, de groupements aldéhyde -CHO ou de groupements cétone -CO-, contenant, en tant que réticulant, un composé qui comporte au moins deux groupements éther d'oxime qui dérivent de groupements H₂N-O.

4. Dispersion ou solution selon la revendication 3, contenant au moins un éther d'oxime de formule II.

5. Dispersion ou solution selon la revendication 3 ou 4, contenant des copolymères ayant une température de transition vitreuse comprise entre -60 et +140°C, le copolymère se composant
a) d'au moins un comonomère comportant au moins un groupement aldéhyde ou cétone,
b) de 20 à 99,99% en poids d'au moins un (méth)acrylate d'alkyle en C₁-C₂₀, un ester vinylique d'acide carboxylique à 1-20 atomes de carbone, un composé vinylaromatique renfermant jusqu'à 20 atomes de carbone, un nitrile à insaturation éthylénique à 3-6 atomes de carbone, un halogénure de vinyle ou un hydrocarbure non aromatique contenant 4 à 8 atomes de carbone et au moins 2 doubles liaisons conjuguées, et
c) de 0 à 50% en poids d'au moins un autre monomère à insaturation éthylénique,
la teneur en monomère a) étant choisie de sorte que le copolymère se compose, pour 0,001 à 20% en poids, de groupements carbonyle -CHO- ou de groupements cétone - CO-, les monomères a), b) et c) s'additionnant à 100% en poids.

6. Utilisation d'une dispersion ou d'une solution selon l'une quelconque des revendications 1 à 5 comme produit d'enduction.

7. Utilisation d'une dispersion ou d'une solution selon l'une quelconque des revendications 1 à 5 comme colle.

8. Substrats enduits, obtenus en utilisant une dispersion ou une solution selon la revendication 1 ou 2.
